(19) Europäisches Patentamt
European Patent Office
Office européen des brevets

(11) Veröffentlichungsnummer: **0 325 973 A2**

(12) **EUROPÄISCHE PATENTANMELDUNG**

(21) Anmeldenummer: **89100616.5**

(51) Int. Cl.⁴: **C09D 11/00 , //C09B44/02**

(22) Anmeldetag: **14.01.89**

(30) Priorität: **23.01.88 DE 3801945**

(43) Veröffentlichungstag der Anmeldung:
**02.08.89 Patentblatt 89/31**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Bruder, Horst, Dr.**
**Dubliner Strasse 25**
**D-6700 Ludwigshafen(DE)**
Erfinder: **Dyllick-Brenzinger, Rainer, Dr.**
**Weinheimer Strasse 44**
**D-6940 Weinheim(DE)**
Erfinder: **Mayer, Udo, Dr.**
**Max-Slevogt-Strasse 27**
**D-6710 Frankenthal(DE)**
Erfinder: **Bares, Steven J., Dr.**
**1725 Woodland**
**Corvallis Oregon 97330(US)**

(54) **Aufzeichnungsflüssigkeit für das Ink-Jet-Verfahren.**

(57) Aufzeichnungsflüssigkeit für das Ink-Jet-Verfahren, enthaltend ein mit Wasser mischbares organisches Lösungsmittel und einen Farbstoff der Formel

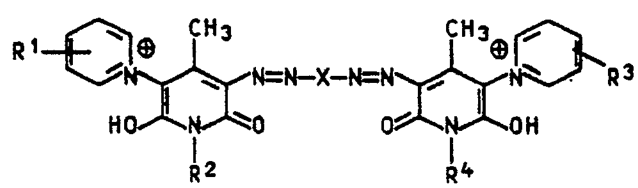

2 An$^{\ominus}$

in der $R^1$, $R^2$, $R^3$ und $R^4$ jeweils die in der Beschreibung genannte Bedeutung besitzen, An$^{\ominus}$ ein Anion und X ein Brückenglied der Formel

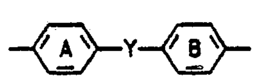

oder

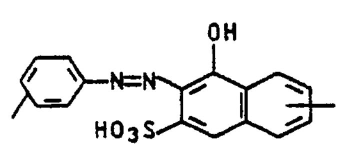

,

bedeuten, wobei Y und die Ringe A und B jeweils die in der Beschreibung genannte Bedeutung besitzen.

EP 0 325 973 A2

## Aufzeichnungsflüssigkeit für das Ink-Jet-Verfahren

Die vorliegende Erfindung betrifft eine neue Aufzeichnungsflüssigkeit für das Ink-Jet-Verfahren, enthaltend ein mit Wasser mischbares organisches Lösungsmittel und einen basischen Farbstoff, der zwei 6-Hydroxypyrid-2-on-Reste aufweist, die jeweils in Ringposition 5 einen Pyridiniumrest tragen und in Ringposition 3 jeweils über eine Azogruppe mit einem Brückenglied, das aus der Diaryl(hetero)alkan-, Arylazoaryl-, Arylcarbonylaminoaryl-oder Arylsulfonylaminoaryl-Reihe stammt, verknüpft sind.

Das Ink-Jet-Verfahren ist an sich bekannt. Dabei werden Tröpfchen einer Schreibflüssigkeit aus einer oder mehreren kleinen Düsen gezielt auf einen Träger, z.B. auf Papier, Holz, Textilien, Kunststoff oder Metall, geschossen. Durch elektronische Aussteuerung werden die einzelnen Tröpfchen zu Schriftzeichen oder graphischen Mustern zusammengefaßt.

Für das Ink-Jet-Verfahren geeignete Aufzeichnungsflüssigkeiten enthalten im allgemeinen als Farbmittel in Wasser und/oder organischen Lösungsmitteln lösliche Farbstoffe. Einige dieser Farbstoffe weisen jedoch Mängel in ihren anwendungstechnischen Eigenschaften, z.B. in der Wasserechtheit oder Schmierechtheit, auf.

Aufgabe der vorliegenden Erfindung war es deshalb, eine neue Aufzeichnungsflüssigkeit für das Ink-Jet-Verfahren bereitzustellen, wobei die darin enthaltenden Farbstoffe ein günstiges anwendungstechnisches Eigenschaftsprofil besitzen sollten.

Es wurde eine neue Aufzeichnungsflüssigkeit für das Ink-Jet-Verfahren gefunden, enthaltend Farbstoff und ein mit Wasser mischbares organisches Lösungsmittel, die dadurch gekennzeichnet ist, daß sie einen Farbstoff der Formel I

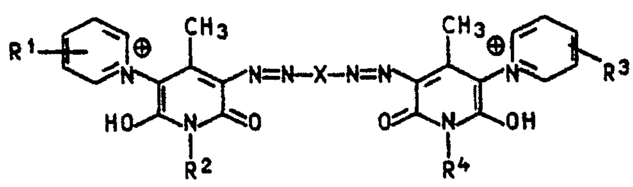

(I)

2 $An^{\ominus}$

enthält, in der

$An^{\ominus}$ ein Anion,

$R^1$ und $R^3$ gleich oder verschieden sind und unabhängig voneinander jeweils Wasserstoff, $C_1$-$C_4$-Alkyl, Carboxyl, $C_1$-$C_4$-Alkoxycarbonyl, Carbamoyl oder $C_1$-$C_4$-Mono- oder Dialkylcarbamoyl,

$R^2$ und $R^4$ gleich oder verschieden sind und unabhängig voneinander jeweils Wasserstoff oder $C_1$-$C_4$-Alkyl, das gegebenenfalls durch Amino, $C_1$-$C_4$-Mono- oder Dialkylamino, oder den Rest

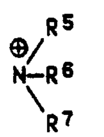

$An^{\ominus}$ ,

wobei $R^5$, $R^6$ und $R^7$ gleich oder verschieden sind und unabhängig voneinander jeweils für $C_1$-$C_4$-Alkyl stehen und $An^{\ominus}$ die obengenannte Bedeutung besitzt, substituiert ist, und

X ein Brückenglied der Formel II oder III

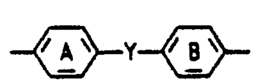

(II)

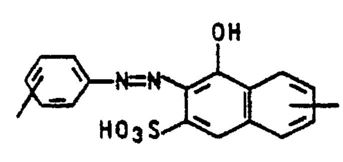

,

(III)

wobei Y für $C_1$-$C_6$-Alkylen, das gegebenenfalls durch Sauerstoff, Imino oder $C_1$-$C_4$-Alkylimino unterbrochen ist, -N=N-, -CO-NH- oder $-SO_2$-NH-steht und die Ringe A und/oder B gegebenenfalls benzoanelliert und/oder durch $C_1$-$C_4$-Alkyl, Hydroxy, $C_1$-$C_4$-Alkoxy, Amino, $C_1$-$C_4$-Mono-oder Dialkylamino oder Hydroxysulfonyl substituiert sind, bedeuten.

Alle in der obengenannten Formel auftretenden Alkyl- und Alkylenreste können sowohl geradkettig als auch verzweigt sein.

Anionen $An^{\ominus}$ leiten sich von anorganischen oder organischen Säuren ab und sind z.B. Fluorid, Chlorid, Bromid, Hydrogensulfat, Sulfat, Aminosulfat, Methosulfat, Ethosulfat, Perchlorat, Tetrafluoroborat, Trichlorozinkat, Methansulfonat, Benzolsulfonat, p-Toluolsulfonat, Formiat, Acetat, Propionat, Lactat, Benzoat, Oxalat oder Succinat.

Reste $R^1$, $R^2$, $R^3$, $R^4$, $R^5$, $R^6$ und $R^7$ sind beispielsweise Methyl, Ethyl, Propyl, Isopropyl, Butyl, Isobutyl oder sec-Butyl.

Reste $R^1$ und $R^3$ sind weiterhin z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Mono- oder Dimethylcarbamoyl, Mono- oder Diethyl carbamoyl, Mono- oder Dipropylcarbamoyl, Mono- oder Diisopropylcarbamoyl, Mono- oder Dibutylcarbamoyl oder N-Methyl-N-ethylcarbamoyl.

Reste $R^2$ und $R^4$ sind weiterhin z.B. 2-Aminoethyl, 2-Methylaminoethyl, 2-Dimethylaminoethyl, 2- oder 3-Aminopropyl, 2- oder 3-Methylaminopropyl, 2- oder 3-Dimethylaminopropyl, 2- oder 4-Aminobutyl, 2- oder 4-Methylaminobutyl oder 2- oder 4-Dimethylaminobutyl.

Reste $R^2$ und $R^4$ sind weiterhin z.B.
$-C_2H_4-\overset{\oplus}{N}(CH_3)_3Cl^{\ominus}$, $-C_2H_4-\overset{\oplus}{N}(CH_3)_3\ CH_3OSO_3^{\ominus}$, $-C_2H_4-\overset{\oplus}{N}(C_2H_5)_3Cl^{\ominus}$, $-C_3H_6-\overset{\oplus}{N}(CH_3)_3\ CH_3OSO_3^{\ominus}$ oder $-C_3H_6-\overset{\oplus}{N}(C_2H_5)_3\ C_2H_5OSO_3^{\ominus}$.

Y bedeutet beispielsweise Methylen, Ethylen, Trimethylen, Tetramethylen, Pentamethylen, Hexamethylen, 1-Methylethylen, 1,2-Dimethylethylen, 2-Methyltrimethylen, 2-Oxatrimethylen, 2-Azatrimethylen, 2-Aza-2-methyltrimethylen, 3-Oxapentamethylen, 3-Azapentamethylen oder 3-Aza-3-methylpentamethylen.

Bevorzugt ist eine Aufzeichnungsflüssigkeit, die solche Farbstoffe der Formel I enthält, in der

$R^1$ und $R^3$ jeweils Wasserstoff, Methyl oder Ethyl,
$R^2$ und $R^4$ jeweils Wasserstoff, Dimethylaminopropyl oder Diethylaminopropyl und
X ein Brückenglied der Formel IIa oder IIIa

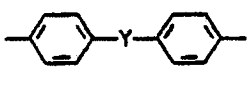

(IIa)

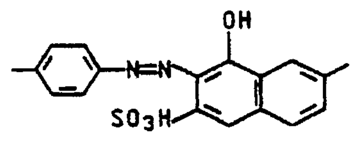

(IIIa)

,

wobei Y für $C_2$-$C_4$-Alkylen, insbesondere Ethylen, -CO-NH- oder $-SO_2$-NH- steht, bedeuten.

Die Farbstoffe der Formel I sind größtenteils bekannt und beispielsweise in der DE-A-2 627 680, DE-A-3 302 614 oder DE-A-3 213 826 beschrieben oder sie können nach den dort (loc.cit.) aufgeführten Methoden erhalten werden.

Die erfindungsgemäße Aufzeichnungsflüssigkeit für das Ink-Jet-Verfahren enthält einen oder mehrere Farbstoffe der Formel I und ein mit Wasser mischbares organisches Lösungsmittel.

Mit Wasser mischbare organische Lösungsmittel sind z.B. $C_1$-$C_4$-Alkanole, wie Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Lactame, wie N-Methylpyrrolid-2-on, cyclische Harnstoffe, wie 1,3-Dimethylimidazolidin-2-on, Ketone oder Ketoalkohole, wie Aceton, Methylethylketon oder 2-Methyl-2-hydroxypentan-4-on, Ether, wie Tetrahydrofuran oder Dioxan, Mono-, Oligo- oder Polyalkylenglykole oder -thioglykole, die $C_2$-$C_6$-Alkyleneinheiten aufweisen, wie Ethylenglykol, 1,2- oder 1,3-Propylenglykol, 1,2- oder 1,4-Butylenglykol, 1,6-Hexylenglykol, Diethylenglykol, Triethylenglykol, Thiodiglykol, Polyethylenglykol oder Polypropylenglykol, andere Polyole, wie Glycerin oder Hexan-1,2,6-triol, $C_1$-$C_4$-Alkylether von mehrwertigen Alkoholen, wie Ethylenglykolmonomethyl- oder -monoethylether, Diethylenglykolmonomethyl-oder -monoethylether oder Triethylenglykolmonomethyl- oder -monoethylether oder Dimethylsulfoxid.

Mit Wasser mischbare organische Lösungsmittel, die bevorzugt sind, sind beispielsweise N-Methylpyrrolidin-2-on, Mono-, Di- oder Trialkylenglykole, die $C_2$-$C_6$-Alkyleneinheiten aufweisen, insbesondere Mono-, Di- oder Triethylenglykol, oder Dimethylsulfoxid. Ganz besonders hervorzuheben sind N-Methylpyrrolidin-2-on, Diethylenglykol oder Dimethylsulfoxid.

Der Anteil des Farbstoffs der Formel I liegt in der Regel bei 2 bis 10 Gew.%, vorzugsweise 3 bis 5 Gew.%, jeweils bezogen auf das Gesamtgewicht der Aufzeichnungsflüssigkeit.

Bevorzugt ist eine Aufzeichnungsflüssigkeit, die neben dem Farbstoff der Formel I und einem mit Wasser mischbaren organischen Lösungsmittel zusätzlich noch Wasser enthält.

In diesem Fall enthält erfindungsgemäße Aufzeichnungsflüssigkeit für das Ink-Jet-Verfahren im allgemeinen 50 bis 95 Gew.% und insbesondere 70 bis 95 Gew.%, jeweils bezogen auf das Gesamtgewicht des Lösungsmittelsystems, an Wasser.

Die neue Aufzeichnungsflüssigkeit kann weiterhin Hilfsmittel, beispielsweise Mittel zur Beeinflussung der Viskosität, wie Polyvinylchlorid oder Cellulosederivate, Tenside (nichtionisch, anionisch oder kationisch) oder Puffersysteme enthalten.

Die folgenden Beispiele sollen die Erfindung näher erläutern.

Allgemeine Herstellvorschrift für eine Aufzeichnungsflüssigkeit

4 bis 5 Gew.-Teile eines Farbstoffs, der nach dem an sich bekannten Verfahren der umgekehrten Osmose von Elektrolyten befreit worden ist, werden in 95 bis 96 Gew.-Teilen einer Flüssigkeit gelöst, deren Zusammensetzung in den nachfolgenden Beispielen angegeben ist. Die Lösung wird unter Druck durch ein Teflon-Filter der Porengröße 1 µm filtriert und danach unter vermindertem Druck entgast.

Mit dieser Aufzeichnungsflüssigkeit wird das Aufnahmegefäß eines Tintenstrahl-Druckkopfes gefüllt, der unter dem Einfluß von zugeführter Wärme die Tinte tröpfchenförmig auswirft. Mit diesem Thermo-Ink-Jet-Druckkopf wird ein handelsübliches Papier, wie es für Maschinenschriften verwendet wird, bedruckt.

Die Abriebechtheit des erhaltenen Schriftbildes wird nach zwei Methoden geprüft:

Methode 1: Überstreichen der Schrift mit einem handelsüblichen Text-Marker

Methode 2: Reiben einer beschriebenen Stelle mit einem angefeuchteten Finger

Die Echtheit des Schriftbildes wird im Rahmen einer von 5 bis 1 reichenden Skala bewertet, wobei 5 bedeutet, daß kein Ausbluten erfolgt, und 1 bedeutet, daß das Schriftbild so stark verschmiert, daß es nicht mehr erkennbar ist.

Zur Herstellung der Tinten wurden die in der Tabelle 1 beschriebenen Farbstoffe der Formel

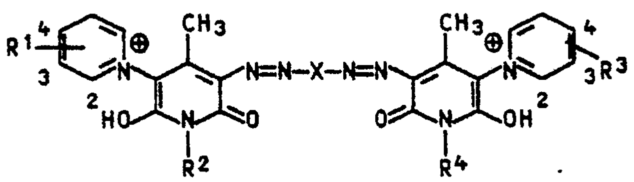

2 $An^{\ominus}$

verwendet.

Tabelle 1

| Farbstoff Nr. | $R^1$ | $R^2$ | $R^3$ | $R^4$ | X | An⊖ |
|---|---|---|---|---|---|---|
| 1 | H | H | H | H | 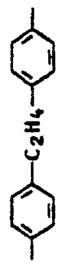 | Chlorid |
| 2 | $3-CH_3$ | H | $3-CH_3$ | H | 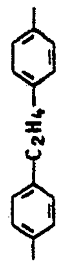 | Chlorid |
| 3 | H | $CH_3$ | H | $CH_3$ | 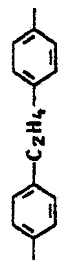 | Chlorid |
| 4 | H | H | H | H | 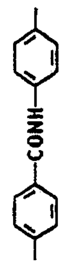 | Chlorid |
| 5 | $3-CH_3$ | H | $3-CH_3$ | H | 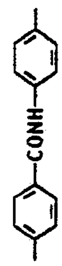 | Chlorid |
| 6 | H | $CH_3$ | H | $CH_3$ | 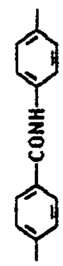 | Chlorid |
| 7 | H | $C_3H_6N(CH_3)_2$ | H | $C_3H_6N(CH_3)_2$ | 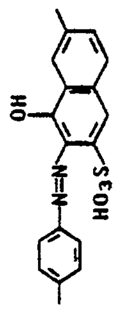 | Chlorid |
| 8 | H | $C_3H_6N(CH_3)_2$ | H | $C_3H_6N(CH_3)_2$ | 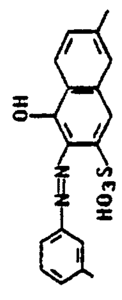 | Chlorid |
| 9 | H | $C_3H_6N(CH_3)_2$ | H | H | 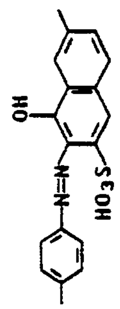 | Chlorid |
| 10 | H | H | H | H | 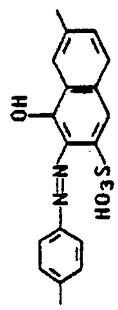 | Chlorid |

Die Farbstoffe 1, 2, 3, 4, 5 und 6 wurden dabei gemäß den Beispielen 1, 50, 55, 7, 61 und 66 der DE-A-2 627 680, die Farbstoffe 7, 8 und 9 gemäß den Beispielen 33, 34 und 35a der DE-A-3 302 614 und der Farbstoff 10 gemäß Beispiel 49 der DE-A-3 213 826 hergestellt.

Die Zusammensetzung der Tinten sowie die Bewertung der Abriebechtheit des Schriftbildes gehen aus der Tabelle 2 hervor. Die wassermischbaren Lösungsmittel (Diethylenglykol oder eine Mischung aus Diethylenglykol und N-Methylpyrrolidin-2-on) sind mit DEG und NMP abgekürzt. W steht für Wasser.

Tabelle 2

| Anwendungsbeispiel Nr. | Farbstoff-Nr. | Anteil des Farbstoffs an der Aufzeichnungsflüssigkeit [Gew.%] | Zusammensetzung des Lösungsmittelsystems [Gew.-Teile] | Farbe | Echtheit nach | |
|---|---|---|---|---|---|---|
| | | | | | Methode 1 | Methode 2 |
| 1 | 1 | 4,5 | W:DEG = 9:1 | gelb | 5 | 4-5 |
| 2 | 2 | 4,5 | W:DEG = 9:1 | gelb | 4 | 4 |
| 3 | 3 | 4,5 | W:DEG = 9,5:0,5 | gelb | 4-5 | 4 |
| 4 | 4 | 4,0 | W:DEG = 9:1 | orange | 4 | 4-5 |
| 5 | 5 | 4,0 | W:DEG = 9:1 | orange | 4 | 3-4 |
| 6 | 6 | 4,5 | W:DEG = 9:1 | orange | 4 | 4 |
| 7 | 7 | 5 | W:DEG:NMP = 6:3:1 | schwarz | 5 | 4-5 |
| 8 | 8 | 5 | W:DEG:NMP = 6:3:1 | schwarz | 4-5 | 4-5 |
| 9 | 9 | 4,5 | W:DEG:NMP = 6:3:1 | schwarz | 4-5 | 4 |
| 10 | 10 | 4,5 | W:DEG:NMP = 6:3:1 | schwarz | 4 | 3-4 |

**Ansprüche**

1. Aufzeichnungsflüssigkeit für das Ink-Jet-Verfahren, enthaltend Farbstoff und ein mit Wasser mischbares organisches Lösungsmittel, dadurch gekennzeichnet, daß sie einen Farbstoff der Formel I

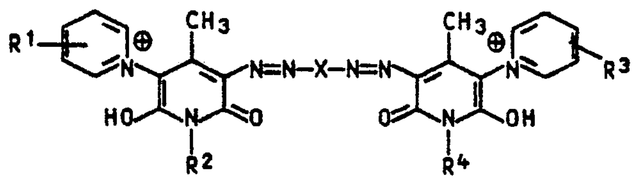

(I)

2 An$^{\ominus}$

enthält, in der

An$^{\ominus}$ ein Anion,

$R^1$ und $R^3$ gleich oder verschieden sind und unabhängig voneinander jeweils Wasserstoff, $C_1$-$C_4$-Alkyl, Carboxyl, $C_1$-$C_4$-Alkoxycarbonyl, Carbamoyl oder $C_1$-$C_4$-Mono- oder Dialkylcarbamoyl,

$R^2$ und $R^4$ gleich oder verschieden sind und unabhängig voneinander jeweils Wasserstoff oder $C_1$-$C_4$-Alkyl, das gegebenenfalls durch Amino, $C_1$-$C_4$-Mono-oder Dialkylamino oder den Rest

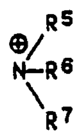 An$^{\ominus}$ ,

wobei $R^5$, $R^6$ und $R^7$ gleich oder verschieden sind und unabhängig voneinander jeweils für $C_1$-$C_4$-Alkyl stehen und An$^{\ominus}$ die obengenannte Bedeutung besitzt, substituiert ist, und

X ein Brückenglied der Formel II oder III

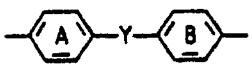

(II)

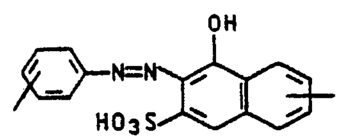

(III) ,

wobei Y für $C_1$-$C_6$-Alkylen, das gegebenenfalls durch Sauerstoff, Imino oder $C_1$-$C_4$-Alkylimino unterbrochen ist, -N=N-, -CO-NH- oder $-SO_2$-NH-steht und die Ringe A und/oder B gegebenenfalls benzoanelliert und/oder durch $C_1$-$C_4$-Alkyl, Hydroxy, $C_1$-$C_4$-Alkoxy, Amino, $C_1$-$C_4$-Mono-oder Dialkylamino oder Hydroxysulfonyl substituiert sind, bedeuten.

2. Aufzeichnungsflüssigkeit gemäß Anspruch 1, dadurch gekennzeichnet, daß sie einen Farbstoff der Formel I enthält, in der

$R^1$ und $R^3$ jeweils Wasserstoff, Methyl oder Ethyl,

$R^2$ und $R^4$ jeweils Wasserstoff, Dimethylaminopropyl oder Diethylaminopropyl und

X ein Brückenglied der Formel IIa oder IIIa

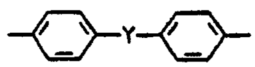

(IIa)

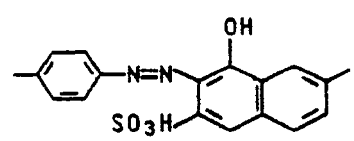

(IIIa) ,

wobei Y für $C_2$-$C_4$-Alkylen, -CO-NH- oder $-SO_2$-NH- steht, bedeuten.

3. Aufzeichnungsflüssigkeit gemäß Anspruch 1, dadurch gekennzeichnet, daß sie zusätzlich Wasser enthält.